# EUROPEAN PATENT APPLICATION

(11) **EP 4 562 992 A1**
(43) Date of publication of application: **04.06.2025**
(21) Application number: 23213035.1
(22) Date of filing: 29.11.2023
(51) Int. Cl.: A01C 7/10, A01C 21/00

(54) **METHOD FOR GENERATING CONTROL DATA FOR CONTROLLING SEEDING OPERATION, COMPUTING UNIT, AND MACHINE LEARNING MODEL**

(71) Applicant: BASF Agro Trademarks GmbH, 67063 Ludwigshafen am Rhein (DE)
(72) Inventor: Wahabzada, Mirwaes, 53859 Niederkassel (DE); Raeis-Dana, Damon, 50678 Koeln (DE); von Hebel, Christian, 50678 Koeln (DE); Hoffmann, Holger, 50678 Koeln (DE)
(74) Representative: Maiwald GmbH

(57) **Abstract**

The invention relates to a method for generating control data (7) for controlling seeding operation. According to the method, previous seeding information (5) for an agricultural field is provided, wherein the previous seeding information (5) comprises data on the seeds applied to the agricultural field during a previous plant season. Further, crop emergence data (6) for a plurality of zones of the agricultural field is obtained, wherein the crop emergence data (6) comprises data on crop emergence of crops that have emerged from the seeds applied to the agricultural field during the previous plant season, obtained after the seeds have been applied to the agricultural field. Based on the previous seeding information (5) and the crop emergence data (6), recommended seeding rates for the plurality of zones or another plurality of zones of the agricultural field are determined. Finally, control data (7) for controlling seeding operation based on the determined recommended seeding rates is generated.

## Description

### Field of the invention

The present invention relates to digital farming. In particular, the present invention relates to a method for generating control data for controlling seeding operation. The present invention further relates to a method for seeding one or more crops on an agricultural field, to a corresponding computing unit, to a use of control data for controlling seeding operation, to a seeder, to a machine learning model for determining seeding rates, and to a seeding map.

### Background of the invention

The seeding rate, i.e., the number or amount of seeds applied to an agricultural field, is a figure in farming that may have impact to the future yield. If the seeding rate is too small, the yield of crops will be below the capabilities of the agricultural field, hence resources will be wasted. If, on the other hand, the seeding rate is too large, the surplus number of seeds will be wasted and, possibly, the crops will interfere with one another and will not grow optimally. Hence, a good seeding rate will generate a high use of resources.

Currently, seeding rates are either chosen as a uniform seeding rate for an entire agricultural field, or based on the farmer's experience. The first option does not account for variations within the agricultural field, and the second option is very tedious and also error-prone.

### Summary of the invention

It is therefore an object of the present invention to generate improved control data for controlling seeding operation. It is a further object of the present invention to provide a method for seeding one or more crops on an agricultural field, a related computing unit, a use of control data for controlling seeding operation, a machine learning model for determining seeding rates, and a method for training said machine learning model.

The object of the present invention is solved by the subject-matter of the independent claims, wherein further embodiments are incorporated in the dependent claims.

According to an aspect of the invention, a method for generating control data for controlling seeding operation is provided.

According to the method, previous seeding information for an agricultural field is provided.

Part of said method may be implemented on a computer. In this context, "computer" may refer to any computing device, e.g., a smartphone, tablet computer, a personal computer, a supercomputer or a computer part of a farm management program on a device. Also, the method may be split on more than one computer, wherein the computers are connected to one another with a wireless and/or wired connection.

The term "agricultural field" is understood to be any area in which organisms, particularly crop plants, are produced, grown and/or sown. The term "agricultural field" also includes horticultural fields. Preferred crops are Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Latcuca sativa, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and Prunus domestica, Raphanus sativus, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera and Zea mays. Most preferred crops are Arachis hypogaea, Beta vulgaris spec. altissima, Brassica napus var. napus, Brassica oleracea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatissimum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays. Especially preferred crops are crops of cereals, corn, soybeans, rice, oilseed rape, cotton, potatoes or peanuts.

The previous seeding information comprises data on the seeds applied to the agricultural field during a previous plant season. The seeds may be seeds for one crop or for more crops. For the method, the seeds that have been applied to the agricultural field during the previous plant season have already emerged. The data on the seeds applied to the agricultural field comprises a seeding rate, wherein the seeding rate specifies the number or amount of seeds applied to the agricultural field, in particular as a number, an amount and/or a weight of seeds per unit area. Alternatively, or additionally, the seeding rate may be given as a number or amount of seeds applied per unit length and/or as control parameters used for a seeder. The data on the seeds applied to the agricultural field may further comprise a time of seeding or a crop type of the seeds.

Further, crop emergence data is obtained for a plurality of zones of the agricultural field.

In this context, the term "zone" is understood to be a sub-field zone or a part of the agricultural field, i.e., the agricultural field can be spatially divided into more than one zone, wherein each zone may have different properties. The zones may be management zones. Each zone may be a polygon, in particular a rectangle. The size of said rectangles may be given by the resolution with which the crop emergence data is obtained. Alternatively, or additionally, adjacent zones having the same properties or having properties differing from one another by at most a predetermined amount may be combined to form a larger zone. Yet alternatively, the plurality of zones may be predetermined and the crop emergence data for each zone may be set to an average, e.g., a mean or a median, of measured crop emergence data for the respective zone.

The crop emergence data comprises data on crop emergence of crops that have emerged from the seeds applied to the agricultural field during the previous plant season and is obtained after the seeds have been applied to the agricultural field during the previous plant season. In particular, crop emergence data is data associated with and/or indicative of a state of the crops on the agricultural field. It may be saved as a computer-readable file, e.g., ajson file, a csv file, a text file or a map. Said computer-readable file comprises data on the crop emergence per zone, e.g., per coordinate.

Based on the previous seeding information and the crop emergence data, recommended seeding rates for the plurality of zones or another plurality of zones of the agricultural field are determined.

The seeding rates may be determined for the same crop as the crop used during the previous plant season. Since different crops may emerge differently, this is the preferred choice. However, if no data for a new kind of crop to be seeded is available, also data from different crops may be used.

The determination of the recommended seeding rates may be performed using a one-dimensional function that depends on the ratio of emerged crops to applied seeds, and may be a monotonically decreasing function of said ratio, i.e., recommending higher seeding rates in areas where fewer crops have emerged from the seeds. Alternatively, the determination of the recommended seeding rates may be performed using a two-dimensional function that depends on the previous seeding rate and the emerged crops. Alternatively, or additionally, the determination of the recommended seeding rates may be performed using a boosted decision tree or a trained neural network.

The recommended seeding rates may be determined to optimize a farmer's return-of-investment. Alternatively, the recommended seeding rates may be determined to optimize a crop yield of the agricultural field. Yet alternatively, the recommended seeding rates may be determined to optimize a crop-to-seed ratio. In either case, using the recommended seeding rates will lead to an optimized seeding and to a high use of resources.

Control data for controlling seeding operation is generated based on the determined recommended seeding rates. With this control data, a seeder may be controlled to seed the crop on the agricultural field according to the recommended seeding rates, resulting in the optimized seeding. The control data may be saved to a file and/or transmitted wirelessly to the seeder, e.g., in an ISO-XML format. The control data may comprise control instructions for the seeder, e.g., to control a path of the seeder, a speed of the seeder, and/or settings of a seeding unit of the seeder. Alternatively, or additionally, the control data may comprise a seeding map. In particular, said seeding map is a digital map, and may be provided as a file., e.g., as a GIS file. The seeding map may comprise the recommended seeding rates, e.g., in dependence on coordinates and/or zones of the plurality of zones or other plurality of zones.

According to an embodiment, the data on the seeds applied to the agricultural field during the previous plant season comprises a uniform seeding rate used for the agricultural field. That is, the seeds had been applied to the agricultural field during the previous plant season at a constant seeding rate. The data on the seeds applied to the agricultural field may then be just one number.

Alternatively, the data on the seeds applied to the agricultural field during the previous plant season comprises seeding rates for yet another plurality of zones of the agricultural field. In this case, the seeding rates may vary from zone to zone of the yet other plurality of zones.

The yet other plurality of zones may be the same as the plurality of zones and/or the other plurality of zones, but may also be different from the plurality of zones and the other plurality of zones.

The data on the seeds applied to the agricultural field during the previous plant season may be provided, e.g., as ajson file, a csv file, a text file or a map. The data may comprise a seeding rate used by a seeder, in particular a smart seeder, to apply the seeds during the previous plant season. Alternatively, the data may comprise an actual rate of seeds applied to the agricultural field obtained by a seeder during the application of the seeds.

According to an embodiment, the step of obtaining crop emergence data is performed in combination with a treatment of the agricultural field. As an example, obtaining crop emergence data may be performed while spraying the agricultural field, wherein spraying the agricultural field may comprise, e.g., spraying water, nutrients, insecticides and/or pesticides. When the crop emergence data is obtained in combination with such a treatment of the agricultural field, time and resources are saved and no extra devices are needed.

According to an embodiment, the step of obtaining crop emergence data comprises capturing one or more image(s) of the agricultural field and analyzing the one or more captured image(s). The one or more image(s) may be captured once the crop plants have emerged from the seeds, in particular, once the crop plants are large enough such that they can be identified, e.g., once they have reached a predetermined leaf size. Analyzing the captured one or more image(s) may comprise counting the number of emerged crop plants, in particular per area of the image. In an example, the result of counting is provided as a crop density. Analyzing the captured images may further comprise distinguishing crops from weeds, wherein only the number of emerged crops is counted to determine the crop density. In this context, "weed" may refer to any plant other than the seeded crop or crops.

According to an embodiment, capturing the image of the agricultural field is performed by an agricultural device. In an example, the agricultural device may be a smart agricultural device. In an example, the agricultural device may be a land vehicle, an air vehicle and/or a space vehicle. An agricultural device may be used for agricultural purposes. In an example, an agricultural device may be equipped with a camera and/or an image recorder for recording and/or transmitting the captured images. Further, the agricultural device may comprise a localization unit, such as a satellite navigation system, to determine the location of the agricultural device. In particular, the agricultural device may be a drone that can capture the one or more image(s) of the agricultural field without interfering with the agricultural field. In other words, the agricultural device may be adapted to remotely capture the one or more image(s) and preventing substantially any physical interaction with the field during capturing the one or more image(s). Alternatively, the agricultural device may be a ground-based agricultural vehicle, more particularly a smart sprayer. If the agricultural device comprises a camera, the camera may be used as a weed sensor for detecting weed. The weed sensor may be adapted to distinguish weed and crop. The agricultural device may comprise a spraying device or sprayer, wherein the sprayer is adapted to spray a fluid on the field, e.g., an herbicide, fungicide and/or water. If spraying is combined with capturing the one or more image(s) to obtain the crop emergence data, time is saved compared to a method where those steps are executed separately and the number of passes of the agricultural device on the agricultural vehicle is kept low.

According to an embodiment, analyzing the captured images is performed with a trained machine learning system, e.g., with a trained artificial neural network, in particular with a trained deep neural network. The machine learning system may support discriminating between crops and weeds. The machine learning system has been trained with a plurality of labeled images of both crops and weeds such that it can distinguish them from one another.

The analysis of the captured images may be performed on the device, i.e., by the agricultural device. In other words, the captured one or more image(s) is/are processed by a processing device that may be included in the agricultural device and/or that may be mounted on the agricultural device. Alternatively, the captured images may be transferred to a computing unit and the analysis of the captured images may be performed by said computing unit. Said computing unit may be, e.g., a computing unit at a farmer's office or a remote computing unit, such as a cloud computing unit. This computing unit may be a remote computing united locally separated from the agricultural device.

According to an embodiment, the step of obtaining crop emergence data for a plurality of zones of the agricultural field is performed at least twice. Hence, crop emergence data is obtained for at least two different times, wherein either time is after the seeds have been applied to the agricultural field and before the plants are harvested during a plant season. The recommended seeding rates are then determined based on the previous seeding information and the crop emergence data for the at least two different times. This additional data leads to improved recommended seeding rates.

According to an embodiment, the crop emergence data comprises information about a crop density. In other words, crop emergence data may be related to a crop density. The crop density may be given, e.g., as number of emerged crops per unit area, or as number of emerged crops per captured image. The crop emergence data may further comprise information such as growth stage, biomass, leaf area index and/or plant drought stress. Any or all of this data may be used to determine the recommended seeding rates.

According to an embodiment, the step of determining recommended seeding rates is performed by a computing unit. Said computing unit may be a computing unit of the agricultural device, a computing unit of the seeder, a computing unit at the farmer's office or a remote computing such as a server in the cloud. The computing unit may be adapted to have access to both the previous seeding information and the crop emergence data, e.g., that the previous seeding information and/or the crop emergence data are transferred to the computing unit, in particular using a wired and/or a wireless connection.

In particular, the determination of the recommended seeding rates is performed using a trained machine learning model, e.g., a trained neural network or a trained boosted decision tree. For training the machine learning model, historical data comprising previous seeding information and crop emergence data corresponding to the previous seeding information is used. In particular, at least two sets of previous seeding information and corresponding crop emergence data for a particular location are provided.

According to another aspect of the invention, a method for seeding one or more crops on an agricultural field is provided. Said method comprises the steps of the method for generating control data for controlling seeding operation according to the above description. The method further comprises controlling a seeder with the generated control data to seed one or more crops on the agricultural field. Since the control data is generated based on the determined recommended seeding rates, the seeding is performed according to the recommended seeding rates. The seeder may be, in particular, a smart seeder. When the seeding is performed in this way, the farmer's return-of-investment, the crop yield of the agricultural field and/or the crop-to-seed ratio will be optimized.

According to yet another aspect of the invention, a computing unit is provided.

The computing unit may be a computing unit of an agricultural device, a computing unit of a seeder, a computing unit at a farmer's office or a remote computing such as a server in the cloud. In particular, the computing unit may provide further digital agricultural services.

The computing unit comprises an input interface, a processing unit, and an output interface.

The input interface is adapted to receive previous seeding information for an agricultural field. Said previous seeding information comprises data on seeds applied to the agricultural field during a previous plant season. The seeding information may comprise the quantity of seeds applied to a specific location. The specific location may be a portion of the field. In an example, the specific location may be one or more zone(s). Thus, the seeding information may comprise a seeding rate for at least one zone and/or for a plurality of zones. In an example, the seeding information comprises a variable seeding rate, i.e., different seeding quantities are applied to different zones. In another example, the seeding information comprises a flat seeding rate, i.e., substantially the same seeding quantity is applied to different zones. The seeding information may be provided as a seeding map.

The input interface is further adapted to receive crop emergence data for substantially the plurality of zones of the agricultural field. Said crop emergence data comprises data on crop emergence of crops that have emerged from the seeds applied to the agricultural field during the previous plant season, obtained after the seeds have been applied to the agricultural field. The crop emergence data may be provided as an emergence map.

The processing unit is configured to determine recommended seeding rates for a specific location. The specific location may be a location on the field. In an example, the specific location may be one or more zone(s). Thus, recommended seeding rates for the plurality of zones or another plurality of zones of the agricultural field are determined based on the previous seeding information and the crop emergence data. The processing unit is further configured to generate control data for controlling seeding operation based on the determined recommended seeding rates.

The output interface is adapted to provide the control data for controlling seeding operation.

Using said computing unit, the farmer's return-of-investment, the crop yield of the agricultural field and/or the crop-to-seed ratio may be high. Further details, embodiments and advantages correspond to the ones given in the above description of the method for generating control data for controlling seeding operation.

According to yet another aspect of the invention, a use of control data for controlling seeding operation that is generated according to the above-described method is provided. Said control data for controlling seeding operation is used for controlling a seeder to seed one or more crops on an agricultural field. Advantages, further details and embodiments correspond to the ones given in the above description of the method for generating control data for controlling seeding operation.

According to yet another invention, a seeder is provided. In particular, said seeder may be a smart seeder. The seeder comprises control unit that is configured to receive control data for controlling seeding operation, and seed one or more crops on an agricultural field based on the control data for controlling seeding operation. Hence, the seeder seeds the crop or crops according to the recommended seeding rates, optimizing the farmer's return-of-investment, the crop yield of the agricultural field and/or the crop-to-seed ratio.

According to yet another aspect of the invention, a machine learning model for determining seeding rates, in particular for determining adjusted seeding rates, is provided.

The machine learning model may be, e.g., an artificial neural network or a boosted decision tree.

The machine learning model takes previous seeding information and crop emergence data as inputs. The previous seeding information comprises data on seeds applied to an agricultural field during a previous plant season and the crop emergence data comprises data on crop emergence of crops that have emerged from the seeds applied to the agricultural field during the previous plant season, obtained after the seeds have been applied to the agricultural field. The previous seeding information and the crop emergence data may be provided for substantially the same zones.

Further, the machine learning model provides recommended seeding rates or adjusted seeding rates as output.

For training the machine learning model, historical data comprising previous seeding information and crop emergence data corresponding to the previous seeding information is used. In particular, at least two sets of previous seeding information and corresponding crop emergence data for a particular location are provided.

The machine learning model is adapted to increase the farmer's return-of-investment, the crop yield of the agricultural field and/or the crop-to-seed ratio. Further details, embodiments and advantages correspond to the ones given in the above description of the method for generating control data for controlling seeding operation.

According to yet another aspect of the invention, a method for training a machine learning model according to the above description is provided.

The method comprises training the machine learning model using historical data comprising previous seeding information and crop emergence data corresponding to the previous seeding information. The previous seeding information and the crop emergence data may be recorded at different time intervals. In an example, the previous seeding information is determined before and/or during a seeding period and the crop emergence data may be determined after the seeding period, e.g. during a period when a mechanical and/or chemical treatment of the field is executed and/or after a predefined grow stage of the crop has been reached In particular, at least two sets of previous seeding information and corresponding crop emergence data for a particular location are used for training the machine learning model. Said training establishes a relationship between seeding rates and crop emergence. A cost function for providing recommended seeding rates is then based on a farmer's return-of-investment, a crop yield of the agricultural field and/or a crop-to-seed ratio.

According to yet another aspect of the invention, a seeding map is provided. The seeding map is generated according to the above described method for generating control data for controlling seeding operation and comprises control information for controlling a seeding device and/or seeding rates. The seeding map may be saved as a file. If the seeding map comprises control information, said information may be provided, e.g., in an ISO-XML format. If the seeding map comprises seeding rates, it may be provided, e.g., as a GIS file.

Using said seeding map, a farmer's return-of-investment, a crop yield of an agricultural field and/or a crop-to-seed ration may be optimized. Further details, embodiments and advantages correspond to the ones given in the above description of the method for generating control data for controlling seeding operation.

### Brief description of the drawings

These and other aspects of the invention will be apparent from and elucidated further with reference to the embodiments described by way of examples in the following description and with reference to the accompanying drawings, in which
- Fig. 1: shows a schematic illustration of an overarching setup in which a method for seeding one or more crops on an agricultural field is carried out;
- Fig. 2: shows a schematic top view of an embodiment of an agricultural system according to the invention;
- Fig. 3: shows a schematic top view of another embodiment of an agricultural system according to the invention;
- Fig. 4: shows an example of three agricultural maps used in an embodiment of a method for determining seeding rates; and
- Fig. 5: shows a flowchart of an example of a method for generating control data for controlling seeding operation.

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

### Detailed description of embodiments

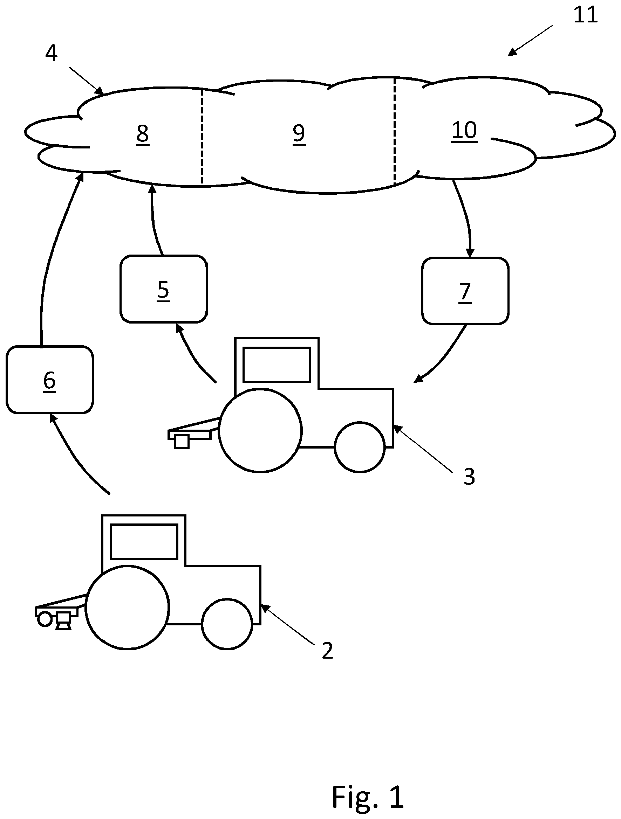

Figure 1 shows a schematic illustration of an overarching setup in which a method 11 for seeding one or more crops on an agricultural field is carried out.

According to the method, a seeder 3, in particular a smart seeder, provides previous seeding information 5 to a computing unit 4, where it is received by an input interface 8. Said previous seeding information 5 comprises data on seeds applied to the agricultural field during a previous plant season, as applied by the seeder 3.

The data on the seeds applied to the agricultural field may comprise a seeding rate, wherein the seeding rate specifies the number or amount of seeds applied to the agricultural field, in particular as a number, an amount and/or a weight of seeds per unit area. Alternatively, or additionally, the seeding rate may be given as a number or amount of seeds applied per unit length and/or as control parameters used for the seeder 3. The data may be provided as a digital map, e.g., as a GIS file. Further, the data may be provided by the seeder 3 to the computing unit 4 using a wireless connection, e.g., directly when the seeder 3 applies the seeds to the agricultural field. Alternatively, or additionally, the data may be provided by the seeder 3 to the computing unit 4 using a wired connection, e.g., at a farm, or using a non-volatile memory medium, such as a USB stick.

Further, an agricultural device 2, e.g., a spraying device, a smart sprayer, a smart spraying device, and/or a seeding device, provides crop emergence data 6 to the computing unit 4, where it is also received by the input interface 8. The crop emergence data 6 is provided for a plurality of zones of the agricultural field, and comprises data on crop emergence of crops that have emerged from the seeds applied to the agricultural field during the previous plant season, and is obtained after the seeds have been applied to the agricultural field.

The crop emergence data 6 may be data associated with and/or indicative of a state of the crops on the agricultural field. It may be provided as a computer-readable file, e.g., ajson file, a csv file, a text file or a digital map. Further, the crop emergence data 6 may be provided by the agricultural device 2 to the computing unit 4 using a wireless connection, e.g., directly when the agricultural device 2 obtains the crop emergence data 6 on the agricultural field. Alternatively, or additionally, the crop emergence data 6 may be provided by the agricultural device 2 to the computing unit 4 using a wired connection, e.g., at a farm, or using a non-volatile memory medium, such as a USB stick.

A processing unit 9 of the computing unit 4 then determines recommended seeding rates for the plurality of zones or another plurality of zones of the agricultural field based on the previous seeding information 5 and the crop emergence data 6 and generates control data 7 for controlling seeding operation based on the determined recommended seeding rates.

The control data 7 for controlling seeding operation is then provided by an output interface 10 of the computing unit 4 to the seeder 3. The seeder 3 may be adapted to distribute seeds to a field according to the control data 7.

The control data 7 may comprise a seeding rate, wherein the seeding rate specifies the number or amount of seeds to be applied to the agricultural field, in particular as a number, an amount and/or a weight of seeds per unit area. Alternatively, or additionally, the control data 7 may be given as a number or amount of seeds to be applied per unit length and/or as control parameters for controlling the seeder 3. The control data 7 may be provided as a digital map, e.g., as a GIS file. Further, the control data 7 may be provided by the computing unit 4 to the seeder 3 using a wireless connection, e.g., directly when the seeder 3 applies the seeds to the agricultural field. Alternatively, or additionally, the data may be provided by the computing unit 4 to the seeder 3 using a wired connection, e.g., at a farm, or using a non-volatile memory medium, such as a USB stick.

The seeder 3 is controlled with the generated control data 7 for controlling seeding operation to seed one or more crops on the agricultural field according to the determined recommended seeding rates.

When the seeding is performed in this way, the farmer's return-of-investment, the crop yield of the agricultural field and/or the crop-to-seed ratio will be optimized.

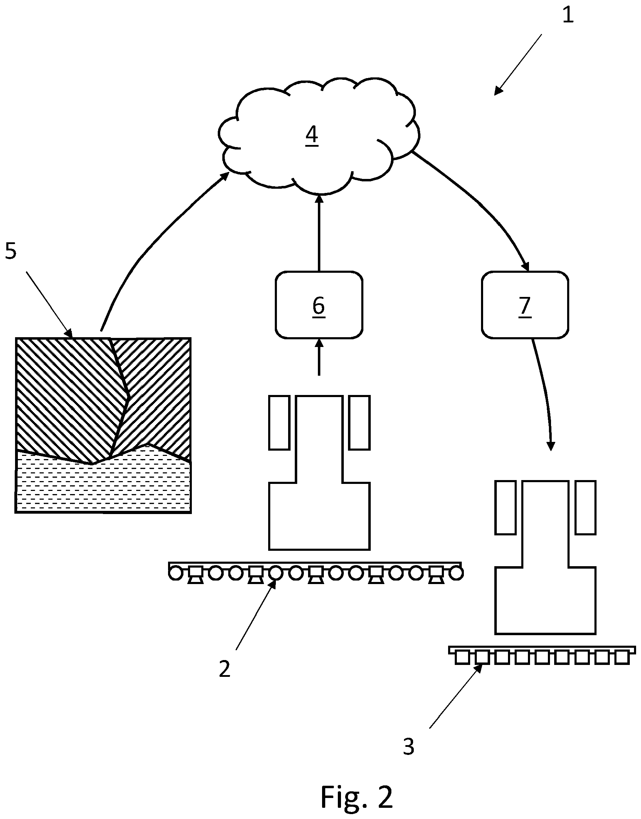

Figure 2 shows a schematic top view of an embodiment of an agricultural system 1. The agricultural system 2 comprises the agricultural device 2, which is, in particular a smart spraying device, an application device, a spraying device, a smart sprayer, and/or a seeding device. Alternatively, the agricultural device 2 may be, e.g., a drone or an agricultural robot. The agricultural system 1 further comprises the seeder 3 and the computing unit 4. Using said agricultural system 1, an embodiment of the method 11 for seeding one or more crops on the agricultural field is described.

The agricultural device 2 may comprise sensors for obtaining crop emergence data. In an example, the sensor may be a camera, a radar, a lidar, and/or an IR (infrared) detector. In particular, the camera may be a multispectral camera (e.g., a camera adapted to measure the normalized density vegetation index (NDVI) and/or the normalized difference red edge index (NDRE)), this type of camera is beneficial, because it improves plant detection. The obtained crop emergence data may be derived from the sensor data at the agricultural device 2. In an example, the agricultural device 2 may comprise the computing unit 4. In another example, the agricultural device 2 may comprise a processing device, configured to determine emergence data from the sensor data.

The sensor may be adapted to obtain the crop emergence data 6 during executing of an agricultural task, in particular a chemical agricultural task or a mechanical agricultural task, during an application task and/or during a field treatment task. For obtaining crop emergence data 6 at substantially the same time as applying an agricultural product to the field a bidirectional signal flow may be necessary. A bidirectional signal flow may be achieved by a bidirectional interface.

According to the method, the previous seeding information 5 for the agricultural field is provided to the computing unit 4. The previous seeding information 5 comprises data on the seeds applied to the agricultural field during a previous plant season. In Figure 2, the previous seeding information 5 is shown as a previous seeding map, but other ways of providing the previous seeding information 5, such as json files or csv tables are also possible. The previous seeding information 5 may be provided from a computer readable data storage and/or a database.

As shown in Figure 2, the previous seeding information 5 comprises seeding rates for a plurality of zones of the agricultural field. In this context, the term "zone" is understood to be a sub-field zone or a part of the agricultural field, i.e., the agricultural field can be spatially divided into more than one zone, wherein each zone may have a different seeding rate. In particular, the zones may be squares or rectangles of the agricultural field, but may also have other shapes. In Figure 1, three different zones are shown, wherein each zone with its own pattern corresponds to a different seeding rate. A plurality of zones may show up when a seeding device is operated with a variable seeding rate. A variable seeding rate may mean that different seeding rates are used for different zones. Within a zone the seeding rate may be substantially constant. The zones may correspond to different field data, e.g., different soil parameter.

In contrast to employing a variable seeding rate, a substantially fixed seeding rate may be used for the complete field. Providing a substantially fixed seeding rate may be referred to as employing a flat seeding rate.

The seeding rates may be provided, e.g., as a number, an amount or a weight per unit area, e.g., per square meter or per acre, or as control information for a seeding device.

The previous seeding information 5 may be obtained from seeding instructions that were used by the seeder 3 or a seeding device to apply seeds to the agricultural field during the previous plant season. Alternatively, the previous seeding information 5 may be provided by the seeder 3, indicating the actually applied number of seeds during the previous plant season.

Further, the crop emergence data 6 for a plurality of zones of the agricultural field is obtained by the agricultural device 2 and sent to the computing unit 4. The plurality of zones of the agricultural field for which the crop emergence data 6 is determined may be the same as the plurality of zones for which the previous seeding information 5 is provided, but may also be different from the plurality of zones for which the previous seeding information 5 is provided. In particular, the plurality of zones may be given by rectangles corresponding to a resolution of crop emergence data provided by the agricultural device 2. Adjacent zones having the same properties or having properties differing from one another by at most a predetermined amount may also be combined to form a larger zone.

The crop emergence data 6 is obtained when the crop has emerged from the seeds, i.e., at a time later than the time at which the seeds have been applied to the agricultural field during the previous plant season. In other words, the previous seeding information 5 and the crop emergence data 6 are provided for different time intervals in the same plant season, i.e., the crops of the crop emergence data 6 have emerged from seeds that had been applied to the agricultural field in agreement with the previous seeding information 5. To obtain the crop emergence data 6, images of the agricultural field are captured by the agricultural device 2. If the agricultural device 2 is a smart sprayer, comprising a plurality of spray nozzles and cameras, the images may be captured while agricultural products such as fertilizer, herbicides and/or pesticides are applied to the agricultural field. In this case, there is no need for a separate image capturing procedure, i.e., the images can be provided at a minimal or at no extra cost. In an example, a storage device for storing the captured images is provided. Alternatively, or in addition, the images may be captured during a separate image capturing tour of the agricultural field, e.g., by the smart sprayer using only the cameras, or by a dedicated image capturing device such as a drone.

The captured images of the agricultural field are then analyzed to obtain the crop emergence data 6. Said analysis may be performed by an analyzing unit of the agricultural device. In this case, the captured images are processed and/or analyzed locally on the agricultural device 2. On device processing may help to provide a low processing time. Processing and/or analyzing the captured image may result in determining the crop emergence. In an example, crop emergence may be provided as number of crop plants per area, e.g., per m². The analyzed data may be converted in a predefined file format, e.g., JSON, CSV, or text. Such a file may comprise the crop emergence per coordinate in the field, e.g., per m². The file is uploaded and/or sent to the computing unit 4. Alternatively, the captured images may be sent substantially unprocessed to the computing unit 4 and the computing unit 4 may perform the analysis of the captured images.

The analysis and/or the processing of the captured images may be performed in a variety of ways. In particular, the captured images may be analyzed by a trained machine learning system. Said trained machine learning system may have been trained with a plurality of labeled images, in particular of crops and/or weeds. Hence, the trained machine learning system can distinguish crops from weeds, and can then count the crops. Alternatively, the captured images may be analyzed using their spectral properties to distinguish crops from weeds, or using image processing with shape recognition.

The crop emergence data 6 then comprises crop density, i.e., the number of crops per area of the agricultural field, e.g., per square meter. The crop emergence data 6 may further comprise growth stage, biomass, leaf area index and/or plant drought stress of the crops.

In an example, the crop emergence data 6 is obtained at least twice per plant season to obtain the crop emergence data for at least two different times. This additional information will lead to an even better determination of recommended seeding rates.

The computing unit 4 then determines recommended seeding rates for a plurality of zones of the agricultural field based on the previous seeding information 5 and the crop emergence data 6. These recommended seeding rates are for a new plant season, later than the previous plant season.

In Figure 1, the computing unit 4 is depicted as remote computing unit, more particularly as cloud computing unit. The cloud computing unit may be located anywhere, or distributed over several locations, and may have access to further information, such as relationships between seeds and crop emergence for the specific kind of crop. Alternatively, the computing unit 4 may be a remote computing unit located in the vicinity of the agricultural field, e.g., in a farmer's office. Yet alternatively, the computing unit 4 may be a part of the agricultural device 2, or may be a part of the seeder 3.

The plurality of zones of the agricultural field for which the recommended seeding rates are determined may be the same as the plurality of zones for which the previous seeding information 5 has been provided and/or the same as the plurality of zones for which the crop emergence data 6 has been obtained. Alternatively, the plurality of zones of the agricultural field for which the recommended seeding rates are determined may be different from both the plurality of zones for which the previous seeding information 5 has been provided and the plurality of zones for which the crop emergence data 6 has been obtained. As an example, the plurality of zones for which the recommended seeding rates are determined may be given as intersecting sets of each of the plurality of zones for which the previous seeding information 5 has been provided and each of the plurality of zones for which the crop emergence data 6 has been obtained. The resulting zones may then be combined to form larger zones, in particular by combining zones that have the same recommended seeding rate or have recommended seeding rates that do not differ from one another by more than a predetermined amount.

The determination of the recommended seeding rates may be performed using a one-dimensional function that depends on the ratio of emerged crops to applied seeds, and may be a monotonically decreasing function of said ratio, i.e., recommending higher seeding rates in areas where relatively few crops have emerged from the seeds, e.g., relative to the average emergence of crops. Alternatively, the determination of the recommended seeding rates may be performed using a two-dimensional function that depends on the previous seeding rate and the emerged crops. Yet alternatively, the determination of the recommended seeding rates may be further based on additional information such as growth stage, biomass, leaf area index and/or plant drought stress. Alternatively, or additionally, the determination of the recommended seeding rates may be performed using a trained machine learning model, such as a trained boosted decision tree or a trained neural network.

The recommended seeding rates may be provided as absolute seeding rate values or as adjustments, e.g., relative to a previous seeding rate or to a flat seeding rate, e.g., given as a change in percent compared to the previous seeding rate or to the flat seeding rate.

Once the recommended seeding rates have been determined, control data 7 for controlling seeding operation is generated based on the recommended seeding rates and is provided to the seeder 3.

The seeder 3 is a seeder that is adapted to apply seeds at varying rates to the agricultural field. While the seeder 3 may be a ground-based vehicle, also an aerial seeder 3, e.g., based on a helicopter or a drone, is possible. The application of the varying rates of seeds is based on the control data 7 for controlling seeding operation, which may be provided as a seeding map. Further, the seeder 3 is equipped with a localization unit that determines the position of the seeder 3, in particular with respect to the seeding map. Said localization unit may be based, e.g., on a satellite navigation system. When the seeder 3 knows its position on the seeding map, it applies the seeds to the agricultural field based on the control data 7 for controlling seeding operation and based on the position of the seeder 3.

Since the seeds are applied at the improved recommended seeding rate, the return-on-investment of the farmer is improved and/or the use of resources is increased.

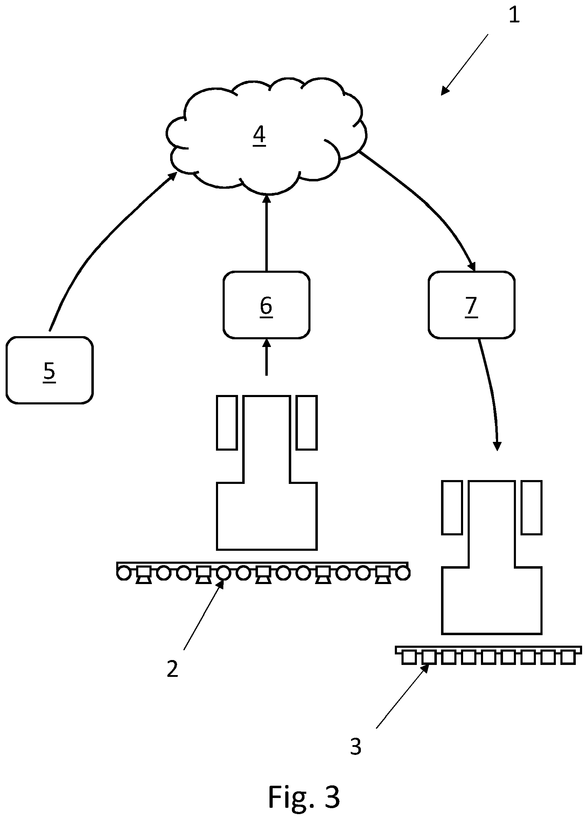

The agricultural system 1 shown in Figure 3 differs from the agricultural system 1 shown in Figure 2 in that the previous seeding information 5 comprises a uniform seeding rate or a flat seeding rate used for the complete agricultural field. In this case, the previous seeding information 5 may comprise just one value corresponding to the seeding rate for the complete agricultural field.

In the embodiment of Figure 3, the plurality of zones for which the recommended seeding rates 7 are determined may be the same as the plurality of zones for which the crop emergence data 6 has been obtained. In particular, equal or similar crop emergence data 6 may yield an equal or similar recommended seeding rate 7, since the seeding rate is constant for the complete agricultural field.

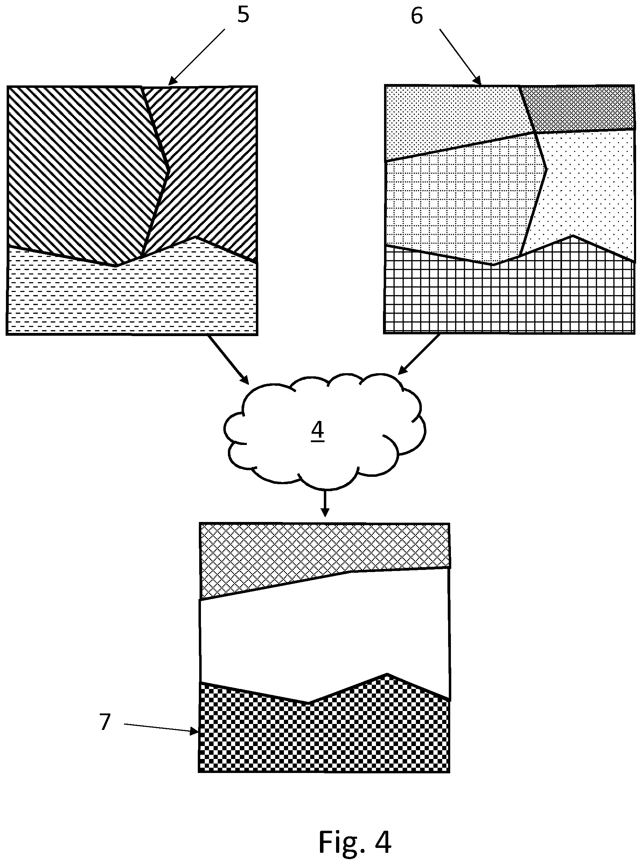

Figure 4 shows an example of three agricultural maps that may be used in the above described method for determining seeding rates. In particular, the computing unit 4 uses a map comprising previous seeding information 5 and a map comprising crop emergence data 6 as input and determines, based on this input, the control data 7 for controlling seeding operation, here shown as a map comprising recommended seeding rates.

In the example of Figure 4, the agricultural field is a square field. Further, the map comprising previous seeding information 5 shows three zones, with different seeding rates per zone. The map comprising crop emergence data 6 then shows five zones, which may have been determined according to the above description by determining crop emergence and/or by determining an emergence map. Compared to the zones of the map comprising previous seeding information 5, two of the zones are divided. This may be, e.g., due to different soil characteristics in the upper half of these divided zones compared to the lower half, or to different climate conditions. The map comprising recommended seeding rates 7 then shows three zones, which may have been determined according to the above description and which are different from the zones of the map comprising previous seeding information 5. In particular, zones of the map comprising the crop emergence data 6 may have been combined to form larger zones since the recommended seeding rates in these zones were equal to one another or differed from one another by no more than a predetermined amount. These three zones of the map comprising recommended seeding rates clearly reflect the different conditions that led to the division of the two zones mentioned above.

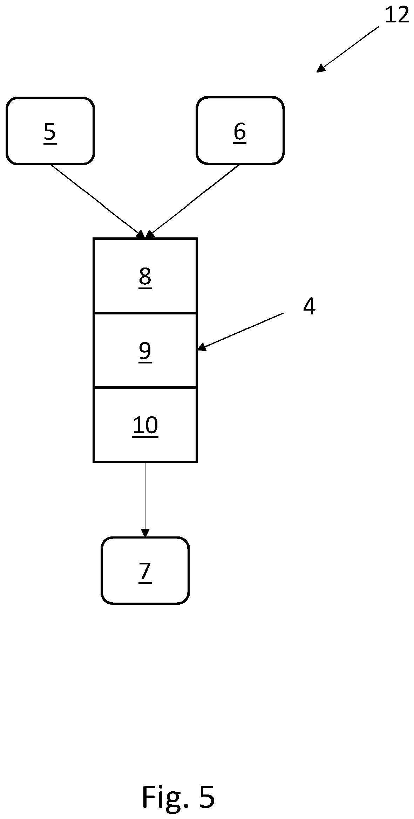

Finally, Figure 5 shows a flowchart of an example of a method 12 for generating control data 7 for controlling seeding operation.

According to the method 12, previous seeding information 5 for an agricultural field is received by the input interface 8 of the computing unit 4. The previous seeding information 5 comprises data on seeds applied to the agricultural field during the previous plant season.

Further, crop emergence data 6 for a plurality of zones of the agricultural field is received by the input interface 8 of the computing unit 14. The crop emergence data 6 comprises data on crop emergence of crops that have emerged from the seeds applied to the agricultural field during the previous plant season, obtained after the seeds have been applied to the agricultural field.

Then, the processing unit 9 of the computing unit 4 determines recommended seeding rates for the plurality of zones or another plurality of zones of the agricultural field based on the previous seeding information 5 and the crop emergence data 6. Said determination may be performed using a one-dimensional function that depends on the ratio of emerged crops to applied seeds, and may be a monotonically decreasing function of said ratio, i.e., recommending higher seeding rates in areas where relatively few crops have emerged from the seeds, e.g., relative to the average emergence of crops. Alternatively, the determination of the recommended seeding rates may be performed using a two-dimensional function that depends on the previous seeding rate and the emerged crops. Yet alternatively, the determination of the recommended seeding rates may be further based on additional information such as growth stage, biomass, leaf area index and/or plant drought stress. Alternatively, or additionally, the determination of the recommended seeding rates may be performed using a trained machine learning model, such as a trained boosted decision tree or a trained neural network.

Based on the determined recommended seeding rates, the processing unit 9 generates control data 7 for controlling seeding operation.

The output interface 10 of the processing unit 4 then provides said control data 7 for controlling seeding operation, in particular, to a seeder 3.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims. In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. Method (12) for generating control data (7) for controlling seeding operation, comprising the steps of:
providing previous seeding information (5) for an agricultural field, wherein the previous seeding information (5) comprises data on seeds applied to the agricultural field during a previous plant season;
obtaining crop emergence data (6) for a plurality of zones of the agricultural field, wherein the crop emergence data (6) comprises data on crop emergence of crops that have emerged from the seeds applied to the agricultural field during the previous plant season, obtained after the seeds have been applied to the agricultural field;
determining recommended seeding rates for the plurality of zones or another plurality of zones of the agricultural field based on the previous seeding information (5) and the crop emergence data (6); and
generating control data (7) for controlling seeding operation based on the determined recommended seeding rates.

2. Method (12) according to claim 1, wherein the data on the seeds applied to the agricultural field during the previous plant season comprises a uniform seeding rate used for the agricultural field or seeding rates for yet another plurality of zones of the agricultural field.

3. Method (12) according to claim 1 or 2, wherein the step of obtaining crop emergence data (6) is performed in combination with a treatment of the agricultural field.

4. Method (12) according to any one of claims 1 to 3, wherein the step of obtaining crop emergence data (6) comprises capturing images of the agricultural field and analyzing the captured images.

5. Method (12) according to claim 4, wherein capturing images of the agricultural field is performed by an agricultural device (2), more particularly a drone and/or a ground-based agricultural vehicle, most particularly a smart sprayer.

6. Method (12) according to claim 4 or 5, wherein analyzing the captured images is performed with a trained machine learning system, more particularly by the agricultural device (2) or by a computing unit (4), more particularly a remote computing unit.

7. Method (12) according to any one of claims 1 to 6, wherein the step of obtaining crop emergence data (6) for a plurality of zones of the agricultural field is performed at least twice to obtain the crop emergence data (6) for at least two different times.

8. Method (12) according to any one of claims 1 to 7, wherein the crop emergence data (6) comprises crop density and, optionally, growth stage, biomass, leaf area index and/or plant drought stress.

9. Method (12) according to any one of claims 1 to 8, wherein the step of determining recommended seeding rates is performed by a computing unit (4), more particularly using a trained machine learning model.

10. Method (10) for seeding one or more crops on an agricultural field, comprising:
the steps of the method (12) according to any one of claims 1 to 9, and
controlling a seeder (3), more particularly a smart seeder, with the generated control data (7) for controlling seeding operation to seed one or more crops on the agricultural field according to the recommended seeding rates.

11. Computing unit (4), comprising
an input interface (8) for receiving previous seeding information (5) for an agricultural field, wherein the previous seeding information (5) comprises data on seeds applied to the agricultural field during a previous plant season, and crop emergence data (6) for a plurality of zones of the agricultural field, wherein the crop emergence data (6) comprises data on crop emergence of crops that have emerged from the seeds applied to the agricultural field during the previous plant season, obtained after the seeds have been applied to the agricultural field,
a processing unit (9) configured to determine recommended seeding rates for the plurality of zones or another plurality of zones of the agricultural field based on the previous seeding information (5) and the crop emergence data (6) and generate control data (7) for controlling seeding operation based on the determined recommended seeding rates, and
an output interface (10) for providing the control data (7) for controlling seeding operation.

12. Use of control data (7) for controlling seeding operation generated according to the method (12) according to any one of claims 1 to 9 for controlling a seeder to seed one or more crops on an agricultural field.

13. Seeder (3), more particularly smart seeder, comprising a control unit, wherein the control unit is configured to
receive control data (7) for controlling seeding operation, and
seed one or more crops on an agricultural field based on the control data (7) for controlling seeding operation.

14. Machine learning model for determining seeding rates, having
previous seeding information (5) and crop emergence data (6) as inputs, wherein the previous seeding information (5) comprises data on seeds applied to an agricultural field during a previous plant season and wherein the crop emergence data (6) comprises data on crop emergence of crops that have emerged from the seeds applied to the agricultural field during the previous plant season, obtained after the seeds have been applied to the agricultural field, and
recommended seeding rates as output.

15. Method for training a machine learning model according to claim 14, comprising:
training the machine learning model using historical data comprising previous seeding information and crop emergence data corresponding to the previous seeding information, more particularly at least two sets of previous seeding information and corresponding crop emergence data for a particular location.
